# EUROPEAN PATENT SPECIFICATION

(11) **EP 1 236 367 B1**
(45) Date of publication and mention of the grant of the patent: **22.02.2006**
(21) Application number: 00987500.6
(22) Date of filing: 08.12.2000
(51) Int. Cl.: H04Q 7/32

(54) **SAFE INFORMATION INTERCHANGE BETWEEN A USER OF A TERMINAL AND A SIM APPLICATION TOOLKIT VIA WAP**
SICHERER INFORMATIONSAUSTAUSCH ZWISCHEN DEM NUTZER EINES ENDGERÄTES UND DEM SIM-APPLICATION-TOOLKIT ÜBER WAP
ECHANGE SECURISE D'INFORMATIONS ENTRE UN UTILISATEUR D'UN TERMINAL ET UNE BOITE A OUTILS D'APPLICATION DU MIA VIA WAP

(30) Priority: 10.12.1999 FI 992661
(43) Date of publication of application: 04.09.2002
(73) Proprietor: TeliaSonera Finland Oyj, 00510 Helsinki (FI)
(72) Inventor: HEINONEN, Petteri, FIN-02600 Espoo (FI); VIRKKULA, Petri, FIN-02150 Espoo (FI)
(74) Representative: Simmelvuo, Markku Kalevi
(86) International application number: PCT/FI2000/001080
(87) International publication number: WO 2001/043472

(56) References cited:
- EP-A2- 0 869 691
- WO-A1-00/02358
- WO-A2-99/63767
- BERENDT A.: 'STK vs WAP Industry battle or peaceful coexistence?' TELECOMMUNICATIONS (INTERNATIONAL EDITION), HORIZON HOUSE PUBLICATIONS January 2000, USA, pages 51 - 54, XP002951478
- BORCHERDING, MALTE: 'Mobile security - An overview of GSM, SAT and WAP' SECURE NETWORKING - CORE (SECURE) '99 INTERNATIONAL EXHIBITION AND CONGRESS, PROCEEDINGS 30 November 1999 - 02 December 1999, DUESSELDORF, GERMANY, pages 133 - 139, XP002951479

## Description

The present invention relates to telecommunication systems. In particular, the invention relates to a method and system for interchanging information safely between the user and a SIM Application Toolkit application (SIM, Subscriber Identity Module) in a telecommunication system comprising a telecommunication network; a terminal device which is connected to the telecommunication network; a smart card which has been inserted into the terminal device; a WAP client program which has been arranged in the terminal device; a SIM Application Toolkit which has been arranged in the terminal device and/or smart card; and a first application which is part of the WAP client program. In the method, the terminal device comprises the necessary features for using the WAP.

### BACKGROUND OF THE INVENTION

The use of the wireless application protocol is becoming common in solutions in which a connection is needed between portable terminal devices, such as mobile stations and the Internet applications, e.g. electronic mail, WWW (World Wide Web), news groups. The wireless application protocol provides an architecture which adapts mobile phones, browser programs of mobile phones, and the WWW to work as a functional entity. The HTML language (Hyper Text Mark-up Language) used in the WWW is translated into a WML (Wireless Mark-up Language) designed for the wireless environment, when information is being transmitted to mobile stations. At present, as the description language of the WAP standard, the WML language is used, but the language may be understood to mean also any other description language consistent with the future WAP standard. The wireless application protocol comprises of the following five layers: wireless application environment (WAE, Wireless Application Environment), wireless session layer (WSL, Wireless Session Layer), wireless transaction layer (WTP, Wireless Transaction Layer), wireless transport layer security (WTLS, Wireless Transport Layer Security), and wireless datagram layer (WDP, Wireless Datagram Layer). The wireless application environment is used to mean, e.g. a WTA (WTA, Wireless Telephone Application), or some other suitable environment. Lowermost is yet a system dependant layer which defines the transfer mode of the information inside the system in question. The specification accepted at the moment is the WAP specification 1.1. The aforementioned specification and other WAP related specifications are available at the Internet address www.wapforum.com.

Ericsson, Motorola, Nokia and Phone.com founded in 1997 the WAP Forum. The WAP Forum is among other things an open association of terminal manufactures, operators and different service providers, which anyone can join. One specific objective of the WAP architecture is to enable the use of services provided by the Internet on terminals whose data processing capacity, size of display or storage capacity is small or restricted. Terminals as described above are, e.g. mobile stations and PDAs (PDA, Personal Digital Assistant). The WAP specification does not take a stand on the fact of how the overhead interface is implemented. This makes it possible for different operators, terminal manufactures and software manufactures to take advantage of the possibilities provided by the standards.

The undeniable advantage of a mobile communication network, e.g. a GSM system (GSM, Global System for Mobile communications) as compared with a public switched telephone network (PSTN, Public Switched Telephone Network) is the mobility management. The mobile communication network enables one to make and receive phone calls anywhere in the coverage area of the network. In this application, a mobile communication network is advantageously used to mean a digital mobile network.

The substantial part of the function of the terminal devices of mobile communication networks, the mobile stations, is the subscribe identity module (SIM, Subscriber Identity Module). When you separate the actual terminal device and the subscriber identity module individualizing the subscriber from one another, a system is established in which specific operators may offer different services to the users of the mobile stations. The operator is herein used to mean an entity which has got the infrastructure of the mobile communication network at his or her disposal in order to provide mobile communication services. The separating of the mobile station and the subscriber identity module from one another enables a constant development of services connected with the mobile stations and the introduction of new, operator-specific services. The functional interface between the mobile station and the subscriber identity module has been described in the specification TS 100 977 V7.3.0 (1999-07) of ETSI. (ETSI, European Telecommunications and Standard Institute).

The step of development connected with the function of the subscriber identity module is the definition of the SIM Application Toolkit which defines specifications to the interface between the mobile station and the subscriber identity module. The SIM Application Toolkit is used to mean all those functions and mechanisms that enable the interaction of the applications on the subscriber identity module with the mobile station. This requires that the mobile station supports the functions and mechanisms needed in the interaction. The SIM application Toolkit has been defined in the specification TS 101 267 V7.3.1 (1999-07) of ETSI. The SIM Application Toolkit is logically entirely separated from the functions of the subscriber identity module, which are connected with the GSM system. There is a certain set of functions defined for the SIM application Toolkit that are connected with the signaling between the subscriber identity module and the mobile station. The aforementioned logical independence of the SIM Application Toolkit enables the applications of the third party. The applications of the third party are used to mean, e.g. operator-specific applications. The communication between the SIM application Toolkit and the function of a normal subscriber entity module happens by using, e.g. the short message service (SMS, Short Message Service). Other ways of communication may be, e.g. the USSD (Unstructured Supplementary Services Data) or the GPRS (General Packet Radio Service) PCT application WO99/63767 discloses a cellular communications system which utilises SIM Application Toolkit-based information messages.

One specific problem is currently the fact of how to interchange information safely in a wireless application environment between the user and the SIM application Toolkit in such a way that the information to be transmitted may be modified, when required, using, e.g. the WMLScript. The WMLScript is a command language connected with the WAP standard.

### OBJECTIVE OF THE INVENTION

The objective of the invention is to eliminate the drawbacks referred to above, or at least significantly to alleviate them. One specific objective of the invention is to disclose a method and system which enables one to handle the input entered by the user in his or her terminal device safely before sending it to the SIM Application Toolkit service.

### BRIEF DESCRIPTION OF THE INVENTION

The invention relates to applications saved to smart cards and to the wireless application protocol environment. The objective of the invention is to enable and improve the use of SIM Application Toolkit applications in a WAP environment by permitting the interchange of information between the WAE environment, user and the SIM Application Toolkit applications.

The telecommunication system in accordance with the invention comprises a telecommunication network, a terminal device which is connected to the telecommunication network, a smart card which has been inserted into the terminal device, a WAP client program which has been arranged in the terminal device and a SIM application Toolkit which has been arranged in the terminal device and/or smart card. In addition, the system comprises a first application which is part of the WAP client program. In the method, the terminal device comprises the necessary features for using the WAP. This means, e.g. that the terminal device comprises a WAP client program and that the terminal device is capable of understanding and presenting functions connected with the WAP client program. The terminal device in accordance with the invention is preferably a mobile station and the telecommunication network is preferably a mobile communication network.

According to the invention, as part of the WAP client program a second application is added that is arranged to start and control the SIM Application Toolkit applications. The second application is used to mean, e.g. a program implemented using the WMLScript command language. The aforementioned first application is used to call the second application when wishing to use SIM Application Toolkit applications. The first application is used to mean, e.g. a program written in the WML description language or in the WMLScript command language. The first application has got a restricted number of commands at its disposal. It may be used only for the starting of the second application at the most. The second application is then used to control and manage SIM Application Toolkit applications and the interchange of information between the user of the terminal device and the SIM Application Toolkit applications. The second application has got the possibility of using more commands for the use of SIM Application Toolkit applications. The second application may, e.g. ask the user for an input, edit it and send the input after editing it to a SIM Application Toolkit application. There is necessarily no need to edit the input defined by the user, instead the input may be sent from the second application to a SIM Application Toolkit application as it is. The second application may only be used to activate a SIM Application Toolkit application at the most.

The second application may be loaded into the terminal device, e.g. via the telecommunication network. To make sure of the origin of the second application, its program code may have been digitally signed by a trusted third party. The trusted third party is an entity which, e.g. ensures the integrity of the signed object. To authenticate the signature, the public key of the sender of the second application has to be made available to the terminal device or the smart card. The availability of the public key may be arranged, e.g. via the telecommunication network. By means of the public key it is possible to make sure of the origin of the second application and of the reliability of the program code. The checking of the authenticity of the second application may also be made by a WIM-card (WIM, WAP Identity Module). The smart card may in this context mean, e.g. the same as the subscriber identity module. Furthermore, the smart card may refer to a subscriber identity module comprising a WIM. Alternatively, the smart card may be a WIM card.

For the use of a SIM Application Toolkit, additional information may be retrieved, e.g. via the telecommunication network. The information retrieval may be arranged, e.g. by means of the second application. The additional information is used to mean, e.g. a piece of definition information or a definition file which comprises information of the use of a SIM Application Toolkit application or of its presentation.

The system in accordance with the invention comprises a second application which has been arranged to start and control SIM Application Toolkit applications, means for calling the second application by means of the first application when wishing to use SIM Application Toolkit applications, and a first means of communication which is used to control SIM Application Toolkit applications and manage the interchange of information between the user of the terminal device and SIM Application Toolkit applications.

The system comprises a transmitter which may be used to send an interrogation message from the second application to the user of the terminal device. The editor in turn is used to edit the input defined by the user before the edited information is sent to the SIM Application Toolkit by means of the second means of communication.

In one embodiment of the invention, the system comprises a first information retrieval entity which is used to load the second application into the terminal device or smart card. Further, in another embodiment, the system comprises a trusted third party which signs the program code connected with the application with a digital signature.

In an embodiment of the invention, the system comprises a second information retrieval entity for loading the public key of the sender of the second application into the terminal device and/or smart card, and means for checking the origin of the sender of the second application.

In an embodiment of the invention, the system comprises a third information retrieval entity which is used to retrieve additional information for the use of SIM Application Toolkit applications.

In an embodiment of the invention, the system comprises a server which is connected to the telecommunication network and from which it is possible to load the second application into a terminal device or smart card.

Thanks to the present invention, it is possible in a WAP environment to handle information to be sent to SIM Application Toolkit applications before the transmission. Furthermore, the invention makes it possible for the third parties to use applications stored on a smart card.

### BRIEF DESCRIPTION OF THE DRAWINGS

In the following section, the invention will be described in detail by the aid of examples of its embodiments, in which
Fig. 1 represents one advantageous example of the system in accordance with the invention,
Fig. 2 is a flow chart illustrating the function of the present invention, and
Fig. 3 is a signalling diagram illustrating the function of the present invention.

### DETAILED DESCRIPTION OF THE INVENTION

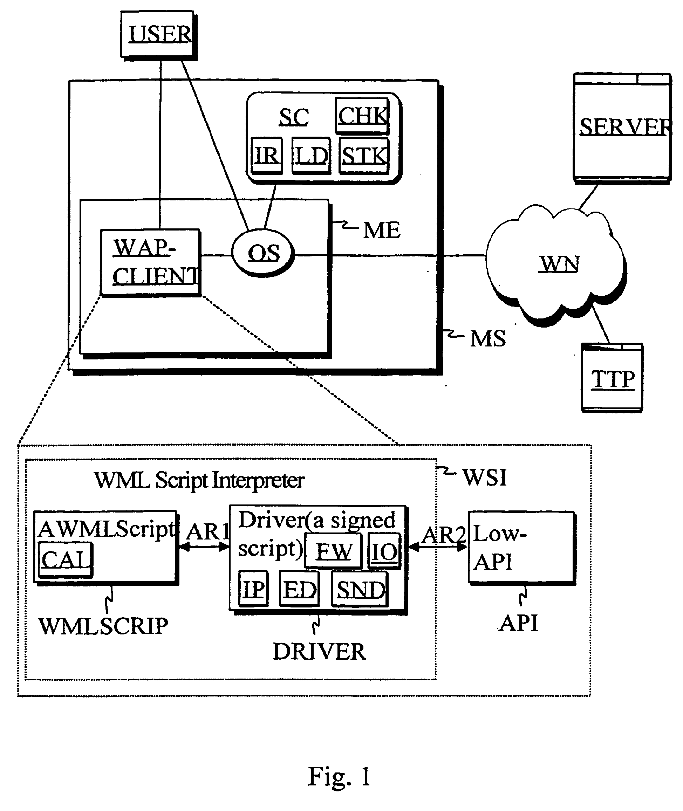

The system as shown in Fig. 1 comprises a terminal device MS, a telecommunication network WN and a server SERVER. The terminal device MS and the server SERVER are in communication with the telecommunication network WN. The terminal device MS is preferably a mobile station and the telecommunication network WN is preferably a mobile communication network. Connected to the telecommunication network WN in this example is, in addition, the trusted third party TTP. The trusted third party TTP is an entity which makes sure, e.g. of the integrity of the signed object. The system as shown in Fig. 1 comprises, in addition, a user USER under whose control and at whose disposal the mobile station MS is. In this example the mobile station MS consists of the mobile station device ME itself and a smart card SC. The mobile station MS may, in addition, comprise many other parts, components and features which are not necessary to present in this connection and which are obvious to a person skilled in the art.

The mobile station device ME comprises an operating system OS and a WAP client program WAPCLIENT. The operating system OS is in communication with the user USER, the WAP client program WAPCLIENT and the smart card SC. Also the user USER may have a direct contact with the operating system OS.

The smart card SC is preferably a subscriber identity module SIM. If the smart card SC is a subscriber identity module, it may also comprise a WIM. In such a situation, the SIM functionality and the WIM functionality connected with the mobile communication network WN may use different logical channels. The WIM is used to mean a protected device, instrument or part which is used to perform different measures and saves of WAP connected with the security. The WIM may be used, e.g. to perform security measures connected with the WTLS and application level. Specifically, the WIM may be used to save and process information which is needed in identification and authentication. The smart card SC may, in addition, be used to mean merely a WIM card.

In the example as shown in Fig. 1, the WAP client program WAPCLIENT comprises among other things a first application WMLSCRIPT which is written, e.g. in the WML description language or in the WMLSCRIPT command language, a second application DRIVER which is written, e.g. in the WMLSCRIPT command language, and a low-level application programming interface API. The first application WMLSCRIPT and the second application DRIVER are part of the WMLScript interpreter WSI. The WMLScript command language is normally written in a text form. This text form has to be translated into a binary form before it can be interpreted by a WMLScript bit code interpreter. The WMLScript interpreter takes the WMLScript bit code to serve as an input and performs coded functions as they are being called.

The first application WMLSCRIPT comprises means CAL for calling the second application DRIVER, when it is wished to use SIM Application Toolkit applications. The means CAL for calling is used to mean, e.g. a function call appearing in the program code. The first application WMLSCRIPT is used to call the second application DRIVER via the standard application programming interface of the second application DRIVER. The arrow AR1 describes the fact that the function calls to be performed are abstract.

The second application DRIVER comprises a first means of communication IP, means SND for sending, means ED for editing, a second means of communication FW and a third means of communication IO. The first means of communication IP is used to control the SIM Application Toolkit applications and to manage the interchange of information between the user USER of the terminal device MS and SIM Application Toolkit applications. The means SND for sending is used to send an interrogation message to the user USER of the terminal device MS. The means ED for editing is used to edit, when required, the input defined by the user. The second means of communication FW is used to send the edited or unedited information defined by the user USER to the SIM Application Toolkit application. The third means of communication is used to retrieve additional information for the use of SIM Application Toolkit applications. The first means of communication IP, means SND for sending, means ED for editing, the second means of communication FW and the third means of communication are used to mean, e.g. a program, program block or a function call.

The second application DRIVER is used to call the low-level application programming interface API. The low-level application programming interface API comprises a standard interface via which it may be called. From the low-level application programming interface API there is a connection, e.g. via the operating system OS of the mobile station MS to the smart card SC and further to the SIM Application Toolkit STK. The arrow AR2 is used to describe the fact that the function calls to be made are calls that implement SIM Application Toolkit commands.

In the example as shown in Fig. 1 the smart card SC comprises a SIM Application Toolkit STK. The SIM Application Toolkit is used to mean all those functions and mechanisms that enable the interaction of applications stored on the subscriber identity module with the mobile station. The smart card SC comprises, in addition, a first information retrieval entity LD, a second information retrieval entity IR and means CHK for checking. The first information retrieval entity LD is used to load the second application DRIVER into the terminal device MS or the smart card SC, e.g. from the telecommunication network WN. The means CHK for checking is used to check the origin of the sender of the second application DRIVER. The program code connected with the second application DRIVER may have been signed by the digitally dependable trusted third party TTP. To enable the checking of the signature, the smart card SC comprises a second information retrieval entity IR which is used to load the public key of the sender of the second application DRIVER into the mobile station MS or the smart card SC. The loaded public key enables one to verify the signature connected with the second application DRIVER.

In an embodiment of Fig. 1, the second application DRIVER has got the following commands at its disposal for the subscriber identity module:
- StartDialog
- GetMenuItems
- ResponseMenuSelection
- ResponseSelectItem
- ResponseGetInput
- ResponseGetInkey
- ResponseDisplayText
- ReplyCommand
- EndDialog

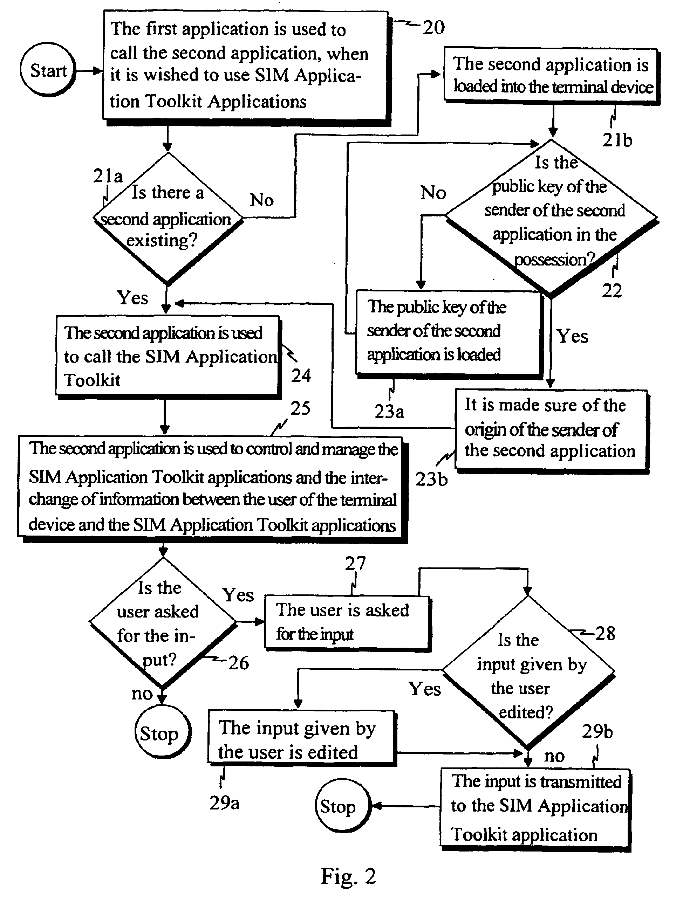

Fig. 2 is a flow chart illustrating the function of the present invention. As shown in block 20, the first application is used to call the second application, when it is wished to use SIM application Toolkit applications. The first application WML is used to mean, e.g. a WML site visible to the user which enables one to activate different commands. The second application is used to mean, e.g. a program in the WMLScript language which enables an interactive operation between the WAP client program and the SIM Application Toolkit applications. As shown in block 20, the first application is used to call the second application, when it is wished to use SIM Application Toolkit applications. The terminal device or smart card at the disposal of the user does not, however, necessarily comprise the second application mentioned above. As shown in block 21a, it is checked if the second application exists. If there is no second application existing, it may be downloaded into the terminal device as shown by block 21b. The second application is loaded into the terminal device or smart card, e.g. via a suitable telecommunication network. The terminal device is preferably a mobile station and the telecommunication network preferably a mobile communication network. The reliability of the application to be loaded and the source address may be verified by means of the public key architecture. As shown in block 22, it is checked whether the public key of the sender of the second application is in the possession of the terminal device or smart card from before. If there is no key existing, it may be loaded, e.g. into the terminal device or smart card, e.g. via the telecommunication network, block 23a. The program code connected with the second application is digitally signed, e.g. by a trusted third party. As shown in block 23b, the public key enables one to make sure of the fact that the sender of the second application is the entity it claims to be.

The second application is used to call the SIM Application Toolkit, when it is wished to use SIM Application Toolkit applications, block 24. As shown in block 25, the second application is used to control and manage SIM Application toolkit applications and the interchange of information between the user of the terminal device and the SIM Application Toolkit applications.

The service to be activated may require an interaction and interchange of information between the user and the SIM Application Toolkit application. As shown in block 26, it is found out whether it is necessary to take an input from the user. If the service does not require an interaction with the user, then the functions required by the service may be carried out without the interaction of the user. If the service requires the information input by the user, then block 28 is entered via block 27. In block 28, it is examined whether the activated service requires that the input defined by the user has to be edited before sending it to the SIM Application Toolkit application. If it is necessary to edit the input defined by the user, block 29b is entered via block 29a. As shown in block 29b, the input given by the user is edited using the second application. If there is no need to edit the input defined by the user at all, then block 29 is entered directly from block 28. As shown in block 29b, the edited or unedited input is transmitted to the SIM Application Toolkit application. The user may be asked for the inputs at several different points and also several times in a row.

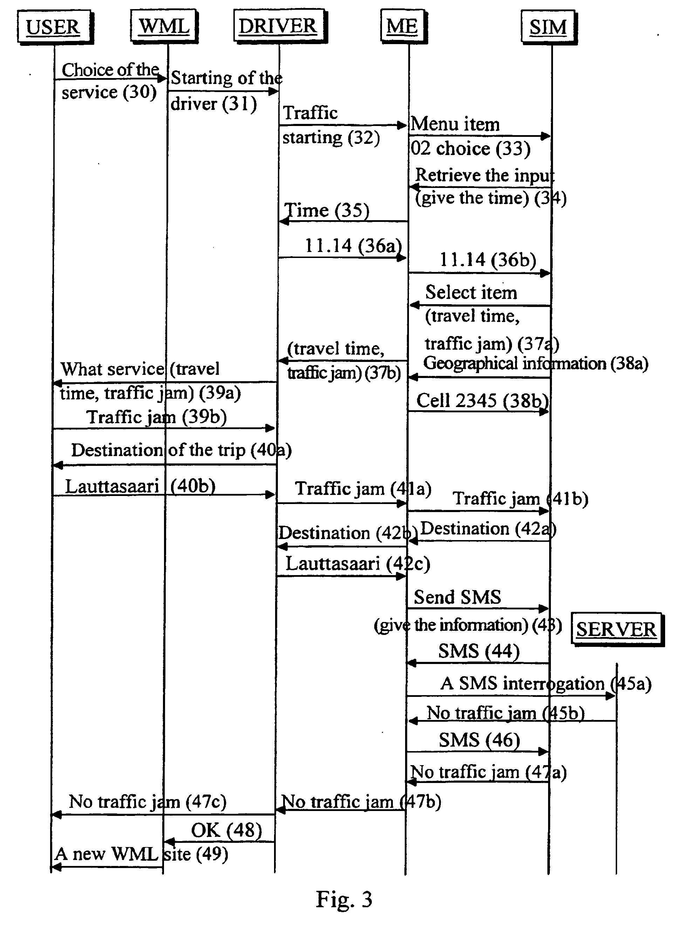

Fig. 3 is one advantageous signaling diagram illustrating the function of the present invention. The example as shown in Fig. 3 comprises a user USER, a first application WML, a second application DRIVER, a mobile station device ME, a subscriber identity module SIM and a server SERVER. The mobile station device ME may also refer to the operating system of the mobile station. The first application WML is used to mean, e.g. the WML site visible to the user which enables one to activate different functions. The second application DRIVER is used to mean, e.g. a program in the WMLScript command language which enables the interactive operation between the WAP client program and the SIM Application Toolkit applications.

The user USER chooses a service as shown by arrow 30. The WAP client program comprises a first application WML which starts the second application DRIVER connected with the service, arrow 31. The second application DRIVER sends a startup message of the traffic to the mobile station device ME, arrow 32. As shown by arrow 33, the mobile station device ME sends to the subscriber identity module SIM a notification of the service chosen by the user USER. For the activated service, a piece of information of the point of time is needed. The subscriber identity module SIM sends an interrogation message to the mobile station device ME, arrow 34. As shown by arrow 35, the interrogation message is transmitted further to the second application DRIVER. As shown by arrows 36a and 36b, the piece of information of the time is transmitted to the subscriber identity module SIM.

The subscriber identity module SIM sends to the mobile station device ME an interrogation message asking to choose the desired service, arrow 37a. As shown by arrow 37b, the mobile station device ME transmits the interrogation message to the second application DRIVER. In this example, the service is used to mean the determining of a travel time or a notification informing of a traffic jam. Both of the aforementioned services require the existence of geographical information. As shown by arrow 38a, the subscriber identity module SIM sends to the mobile station device ME an interrogation message inquiring the location of the user USER and this way also the location of the mobile station device ME. The mobile station device ME returns the piece of geographical information to the subscriber identity module SIM, arrow 38b.

The second application DRIVER transmits the interrogation message connected with the service further to the user USER, arrow 39a. In this situation, the user is asked to choose the desired service. The choosing happens, e.g. by accepting the service by pushing a certain key. As shown by arrow 39b, the notification of the chosen service is transmitted to the second application DRIVER. In this application, the chosen service is that the user USER wishes to find out whether there are any traffic jams along a certain route. So that the service would function, the destination of the journey is still needed that is found out by message interrogations 40a and 40b. In this example, the destination of the user is Lauttasaari.

As shown by arrow 41a, the second application DRIVER transmits the notification of the service chosen by the user USER to the mobile station device ME, which in turn transmits the notification further to the subscriber identity module SIM, arrow 41b. The subscriber identity module SIM sends to the mobile station device ME a message interrogation concerning the piece of destination information connected with the service, arrow 42a. The message interrogation is transmitted further to the second application DRIVER, arrow 42b. Since the user USER has already earlier determined the piece of destination information, it may be transmitted back to the mobile station device ME, arrow 42c.

The user USER has now determined all the background information required by the service. The mobile station device ME sends to the subscriber identity module SIM a message interrogation asking to give the necessary information needed in the transmission of the short message, arrow 43. The subscriber identity module SIM creates a message based on the information and parameters connected with the service and transmits it to the mobile station device ME, arrow 44. The mobile station device ME sends a SMS interrogation to the server SERVER. The server SERVER has got information of the fact of whether there is a traffic jam between the location of the user USER and Lauttasaari. In this example, there is no traffic jam, and the server SERVER sends a notification thereof back to the mobile station device ME, arrow 45b.

The mobile station device ME sends the received short message further to the subscriber identity module SIM, arrow 46. The SIM Application Toolkit application on the subscriber identity module SIM interpreters the content of the short message and based on the content, transmits the notification further to the mobile station device ME, arrow 47a. The mobile station device ME transmits the answer in accordance with the invention to the second application DRIVER, which in turn transmits the answer to the USER, arrows 47b and 47c. The second application DRIVER sends to the first application WML a notification informing of the termination of the service, arrow 48. The first application WML substitutes the WML site visible to the USER with a new one indicating that the service is no longer available, arrow 49.

The invention is not restricted merely to the examples of its embodiments, instead many variations are possible within the inventive idea defined by the claims.

## Claims

1. A method for interchanging information safely between the user and a SIM Application Toolkit application in a telecommunication system comprising:
a telecommunication network (WN);
a terminal device (MS) which is connected to the telecommunication network (WN);
a smart card (SC) which has been inserted into the terminal device (MS);
a WAP client program (WAPCLIENT) which has been arranged in the terminal device (MS);
a SIM Application Toolkit (STK) which has been arranged in the terminal device (MS) and/or smart card (SC);
a first application (WMLSCRIPT) which is part of the WAP client program (WAPCLIENT);
in which method the terminal device (MS) comprises the necessary features for using the WAP,
**characterised in that** the method comprises the steps of:
including as a part of the WAP client program (WAPCLIENT) a second application (DRIVER) which has been arranged to start and control SIM Application Toolkit applications;
calling the second application (DRIVER) by means of the first application (WMLSCRIPT) when wishing to use SIM Application Toolkit applications; and
controlling and managing by means of the second application (DRIVER) SIM Application Toolkit applications and the interchange of information between the user of the terminal device (MS) and SIM Application Toolkit applications.

2. A method as defined in claim 1, **characterised in that**
the second application (DRIVER) is used to send an interrogation message to the user of the terminal device (MS), and
the response of the user to the interrogation message is being edited; and
the edited information is sent to the SIM Application Toolkit application.

3. A method as defined in claim 1, **characterised in that**
the second application (DRIVER) is used to send an interrogation message to the user of the terminal device (MS), and
the information defined by the user is sent to the SIM Application Toolkit application.

4. A method as defined in any one of the preceding claims 1, 2 or 3, **characterised in that** the second application (DRIVER) is loaded into the terminal device (MS) or the smart card (SC).

5. A method as defined in any one of the preceding claims 1, 2 or 3, **characterised in that** the second application (DRIVER) is loaded into the terminal device (MS) or the smart card (SC) from the telecommunication network (WN).

6. A method as defined in any one of the preceding claims 1, 2, 3, 4 or 5, **characterised in that** the program code connected with the second application (DRIVER) is signed with a digital signature.

7. A method as defined in any one of the preceding claims 1, 2, 3, 4, 5 or 6, **characterised in that**
the public key of the sender of the second application (DRIVER) is loaded into the terminal device (MS) and/or the smart card (SC); and
the origin of the sender of the second application (DRIVER) is checked.

8. A method as defined in any one of the preceding claims 1, 2, 3, 4, 5, 6 or 7, **characterised in that** additional information is retrieved for the use of the SIM Application Toolkit applications.

9. A system for interchanging information safely between the user and the SIM Application Toolkit application in a telecommunication system comprising:
a telecommunication network (WN);
a terminal device (MS) which is connected to the telecommunication network (WN);
a smart card (SC) which has been inserted into the terminal device (MS);
a WAP client program (WAPCLIENT) which has been arranged in the terminal device (MS);
a SIM Application Toolkit (STK) which has been arranged in the terminal device (MS) and/or smart card (SC) ;
a first application (WMLSCRIPT) which is part of the WAP client program (WAPCLIENT);
in which system the terminal device (MS) comprises the necessary features for using the WAP,
**characterised in that** the system comprises:
a second application (DRIVER) which has been arranged to start and control the SIM Application Toolkit applications;
means (CAL) for calling the second application (DRIVER) by means of the first application (WMLSCRIPT) when wishing to use SIM Application Toolkit applications; and
a first means of communication (IP) which is used to control the SIM Application Toolkit applications and manage the interchange of information between the user of the terminal device and SIM Application Toolkit applications.

10. A system as defined in claim 9, **characterised in that** the system comprises:
means (SND) for sending an interrogation message by means of the second application (DRIVER) to the user of the terminal device (MS);
means (ED) for editing the response defined by the user; and
a second means of communication (FW) for sending the edited information to the SIM Application Toolkit application.

11. A system as defined in claim 9, **characterised in that** the system comprises:
means (SND) for sending an interrogation message by means of the second application (DRIVER) to the user of the terminal device (MS); and
a second means of communication (FW) for sending the information defined by the user to the SIM Application Toolkit application.

12. A system as defined in any one of the preceding claims 9, 10 or 11, **characterised in that** the system comprises a first information retrieval entity (LD) for loading the second application (DRIVER) into the terminal device (MS) or the smart card (SC).

13. A system as defined in any one of the preceding claims 9, 10, 11 or 12, **characterised in that** the system comprises a trusted third party (TTP) for signing the program code connected with the second application (DRIVER) with a digital signature.

14. A system as defined in any one of the preceding claims 9, 10, 11, 12 or 13, **characterised in that** the system comprises:
a second information retrieval entity (IR) for loading the public key of the sender of the second application (DRIVER) into the terminal device (MS) and/or the smart card (SC); and
means (CHK) for checking the origin of the sender of the second application (DRIVER).

15. A system as defined in any one of the preceding claims 9, 10, 11, 12, 13 or 14, **characterised in that** the system comprises a third in-formation retrieval entity (IO) which is used to retrieve additional information for the use of SIM Application Toolkit applications.

16. A system as defined in any one of the preceding claims 9, 10, 11, 12, 13 , 14 or 15, **characterised in that** the system comprises a server (SERVER) which is connected to the telecommunication network (WN) and from which it is possible to load the second application (DRIVER) into the terminal device (MS) or the smart card (SC).

17. A system as defined in any one of the preceding claims 9, 10, 11, 12, 13, 14, 15 or 16, **characterised in that** the first application (WMLSCRIPT) and/or the second application (DRIVER) are based on the WML language or on the WMLScript command language.

18. A system as defined in any one of the preceding claims 9, 10, 11, 12, 13, 14, 15, 16 or 17, **characterised in that** the terminal device (MS) is a mobile station.

19. A system as defined in any one of the preceding claims 9, 10, 11, 12, 13, 14, 15, 16, 17 or 18, **characterised in that** the telecommunication network (WN) is a mobile communication network.

20. A system as defined in any one of the preceding claims 9, 10, 11, 12, 13, 14, 15, 16, 17, 18 or 19, **characterised in that** the smart card (SC) is a subscriber identity module.

21. A system as defined in any one of the preceding claims 9, 10, 11, 12, 13, 14, 15, 16, 17, 18 or 19, **characterised in that** the smart card (SC) is a subscriber identity module which comprises a WIM.

22. A system as defined in any one of the preceding claims 9, 10, 11, 12, 13 , 14 , 15 , 16, 17, 18 or 19, **characterised in that** the smart card (SC) is a WIM card.

## Patentansprüche

1. Verfahren zum sicheren Austauschen von Informationen zwischen dem Nutzer und einer Anwendung eines SIM-Application-Toolkits bzw. SIM-Werkzeugsatzes in einem Telekommunikationssystem mit:
- einem Telekommunikationsnetz (WN);
- einem Endgerät (MS), welches mit dem Telekommunikationsnetz (WN) in Verbindung steht;
- einen Smartcard (SC), welche in das Endgerät (MS) eingesetzt ist;
- ein WAP-Kundenprogramm (WAPCLIENT), welches in dem Endgerät (MS) angeordnet ist;
- ein SIM-Application-Toolkit (STK), welcher in dem Endgerät (MS) und/oder in der Smartcard (SC) angeordnet ist;
- eine erste Anwendung (WMLSCRIPT), welche Teil des WAP-Kundenprogramm (WAPCLIENT) ist;
wobei das Endgerät (MS) in dem Verfahren die notwendigen Eigenschaften zur Benutzung des WAP aufweist,
**dadurch gekennzeichnet, dass** das Verfahren die folgenden Verfahrensschritte aufweist:
- Einbinden einer zweiten Anwendung (DRIVER), welche zum Starten und Steuern von SIM-Application-Toolkits-Anwendungen angeordnet ist, als einen Teil des WAP-Kundenprogramms (WAPCLIENT);
- Aufrufen der zweiten Anwendung (DRIVER) mittels der ersten Anwendung (WMLSCRIPT), wenn eine Verwendung von SIM-Application-Toolkits-Anwendungen gewünscht wird; und
- Steuern und Verwalten von SIM-Application-Toolkits-Anwendungen und des Informationsaustausches zwischen dem Nutzer des Endgeräts (MS) und SIM-Application-Toolkits-Anwendungen mittels der zweiten Anwendung (DRIVER).

2. Verfahren nach Anspruch 1, **dadurch gekennzeichnet, dass**
die zweite Anwendung (DRIVER) zum Senden einer Abfragemitteilung an den Nutzer des Endgeräts (MS) verwendet wird, und
wobei die Antwort des Nutzers auf die Abfragemitteilung bearbeitet wird; und die bearbeitete Information an die SIM-Application-Toolkit-Anwendung gesendet wird.

3. Verfahren nach Anspruch 1, **dadurch gekennzeichnet, dass**
die zweite Anwendung (DRIVER) zum Senden einer Abfragemitteilung an den Nutzer des Endgeräts (MS) verwendet wird, und
die von dem Nutzer festgelegte Information an die SIM-Application-Toolkit-Anwendung gesendet wird.

4. Verfahren nach einem der vorhergehenden Ansprüche 1, 2 oder 3, **dadurch gekennzeichnet, dass** die zweite Anwendung (DRIVER) in das Endgerät (MS) oder in die Smartcard (SC) geladen wird.

5. Verfahren nach einem der vorhergehenden Ansprüche 1, 2 oder 3, **dadurch gekennzeichnet, dass** die zweite Anwendung (DRIVER) aus dem Telekommunikationsnetz (WN) in das Endgerät (MS) oder in die Smartcard (SC) geladen wird.

6. Verfahren nach einem der vorhergehenden Ansprüche 1, 2, 3, 4 oder 5, **dadurch gekennzeichnet, dass** der mit der zweiten Anwendung (DRIVER) verbundene Programmcode mit einer digitalen Signatur unterschrieben ist.

7. Verfahren nach einem der vorhergehenden Ansprüche 1, 2, 3, 4, 5 oder 6, **dadurch gekennzeichnet, dass**
der öffentliche Schlüssel des Senders der zweiten Anwendung (DRIVER) in das Endgerät (MS) und/oder in die Smartcard (SC) geladen wird; und
der Ursprung des Senders der zweiten Anwendung (DRIVER) überprüft wird.

8. Verfahren nach einem der vorhergehenden Ansprüche 1, 2, 3, 4, 5, 6 oder 7, **dadurch gekennzeichnet, dass** zusätzliche Informationen für die Benutzung der SIM-Application-Toolkit-Anwendung wiederhergestellt werden.

9. System zum sicheren Informationsaustausch zwischen dem Nutzer und einer Anwendung eines SIM-Application-Toolkits bzw. SIM-Werkzeugsatzes in einem Telekommunikationssystem mit:
- einem Telekommunikationsnetz (WN);
- einem Endgerät (MS), welches mit dem Telekommunikationsnetz (WN) in Verbindung steht;
- einen Smartcard (SC), welche in das Endgerät (MS) eingesetzt ist;
- ein WAP-Kundenprogramm (WAPCLIENT), welches in dem Endgerät (MS) angeordnet ist;
- ein SIM-Application-Toolkit (STK), welcher in dem Endgerät (MS) und/oder in der Smartcard (SC) angeordnet ist;
- eine erste Anwendung (WMLSCRIPT), welche Teil des WAP-Kundenprogramm (WAPCLIENT) ist;
wobei das Endgerät (MS) in dem System die notwendigen Eigenschaften zur Benutzung des WAP aufweist,
**dadurch gekennzeichnet, dass** das System Folgendes aufweist:
- eine zweite Anwendung (DRIVER), welche zum Start und zur Steuerung von SIM-Application-Toolkits-Anwendungen angeordnet ist;
- Einrichtungen (CAL) zum Aufruf der zweiten Anwendung (DRIVER) mittels der ersten Anwendung (WMLSCRIPT), wenn eine Verwendung von SIM-Application-Toolkits-Anwendungen gewünscht wird; und
- eine erste Kommunikationseinrichtung (IP), die zur Steuerung von SIM-Application-Toolkits-Anwendungen und zur Verwaltung des Informationsaustausches zwischen dem Nutzer des Endgeräts und SIM-Application-Toolkits-Anwendungen verwendet wird.

10. System nach Anspruch 9, **dadurch gekennzeichnet, dass** das System Folgendes aufweist:
- Einrichtungen (SND) zur Sendung einer Abfragemitteilung mittels der zweiten Anwendung (DRIVER) an den Nutzer des Endgeräts (MS);
- Editiereinrichtungen (ED) für die von dem Nutzer festgelegte Antwort; und
- eine zweite Kommunikationseinrichtung (FW) zur Sendung der bearbeiteten Informationen an die SIM-Application-Toolkit-Anwendung.

11. System nach Anspruch 9, **dadurch gekennzeichnet, dass** das System Folgendes aufweist:
- Einrichtungen (SND) zur Sendung einer Abfragemitteilung mittels der zweiten Anwendung (DRIVER) an den Nutzer des Endgeräts (MS); und
- eine zweite Kommunikationseinrichtung (FW) zur Sendung der von dem Nutzer festgelegten Informationen an die SIM-Application-Toolkit-Anwendung.

12. System nach einem der vorhergehenden Ansprüche 9, 10 oder 11, **dadurch gekennzeichnet, dass** das System eine erste Einheit (LD) zur Wiederherstellung von Informationen zur Ladung der zweiten Anwendung (DRIVER) in das Endgerät (MS) oder in die Smartcard (SC) aufweist.

13. System nach einem der vorhergehenden Ansprüche 9, 10, 11 oder 12, **dadurch gekennzeichnet, dass** das System eine Trusted Third Party bzw. vertrauenswürdige dritte Partei (TTP) zur Signierung des mit der zweiten Anwendung (DRIVER) verbundenen Programmcodes mit einer digitalen Signatur aufweist.

14. System nach einem der vorhergehenden Ansprüche 9, 10, 11, 12 oder 13, **dadurch gekennzeichnet, dass** das System Folgendes aufweist:
eine zweite Einheit (IR) zur Wiederherstellung von Informationen zur Ladung des öffentlichen Schlüssels des Senders der zweiten Anwendung (DRIVER) in das Endgerät (MS) und/oder in die Smartcard (SC); und
Einrichtungen (CHK) zur Überprüfung des Ursprungs des Senders der zweiten Anwendung (DRIVER).

15. System nach einem der vorhergehenden Ansprüche 9, 10, 11, 12, 13 oder 14, **dadurch gekennzeichnet, dass** das System eine dritte Einheit (IO) zur Wiederherstellung von Informationen aufweist, welche zur Wiederherstellung von zusätzlichen Informationen für die Benutzung von SIM-Application-Toolkits-Anwendungen verwendet wird.

16. System nach einem der vorhergehenden Ansprüche 9, 10, 11, 12, 13, 14 oder 15, **dadurch gekennzeichnet, dass** das System einen Server (SERVER) aufweist, welcher mit dem Telekommunikationsnetz (WN) verbunden ist, und von welchem es möglich ist, die zweite Anwendung (DRIVER) in das Endgerät (MS) oder in die Smartcard (SC) zu laden.

17. System nach einem der vorhergehenden Ansprüche 9, 10, 11, 12, 13, 14, 15 oder 16, **dadurch gekennzeichnet, dass** die erstes Anwendung (WMLSCRIPT) und/oder die zweite Anwendung (DRIVER) auf der WML-Sprache oder auf der WMLScript-Befehlssprache basieren.

18. System nach einem der vorhergehenden Ansprüche 9, 10, 11, 12, 13, 14, 15, 16 oder 17, **dadurch gekennzeichnet, dass** das Endgerät (MS) eine Mobilfunkendgerät ist.

19. System nach einem der vorhergehenden Ansprüche 9, 10, 11, 12, 13, 14, 15, 16, 17 oder 18, **dadurch gekennzeichnet, dass** das Telekommunikationsnetz (WN) ein Mobilkommunikationsnetz ist.

20. System nach einem der vorhergehenden Ansprüche 9, 10, 11, 12, 13, 14, 15, 16, 17, 18 oder 19, **dadurch gekennzeichnet, dass** die Smartcard (SC) ein Subscriber-Identity-Module ist.

21. System nach einem der vorhergehenden Ansprüche 9, 10, 11, 12, 13, 14, 15, 16, 17, 18 oder 19, **dadurch gekennzeichnet, dass** die Smartcard (SC) ein Subscriber-Identity-Module ist, welches ein WIM aufweist.

22. System nach einem der vorhergehenden Ansprüche 9, 10, 11, 12, 13, 14, 15, 16, 17, 18 oder 19, **dadurch gekennzeichnet, dass** die Smartcard (SC) eine WIM-Card ist.

## Revendications

1. Procédé d'échange sécurisé d'informations entre l'utilisateur et une application d'une boîte à outils d'application du MIA (Module d'Identification de l'Abonné - SIM) dans un système de télécommunications comprenant :
un réseau de télécommunications (WN) ;
un dispositif formant terminal (MS), qui est connecté au réseau de télécommunications (WN) ;
une carte à puce (SC) qui a été insérée dans le dispositif formant terminal (MS) ;
un logiciel client WAP (WAPCLIENT) qui a été chargé dans le dispositif formant terminal (MS) ;
une boîte à outils d'application du MIA (STK) qui a été chargée dans le dispositif formant terminal (MS) et / ou la carte à puce (SC) ;
une première application (WMLSCRIPT) qui fait partie du logiciel client WAP (WAPCLIENT) ;
un procédé dans lequel le dispositif formant terminal (MS) est doté des caractéristiques nécessaires pour utiliser le protocole WAP ;
**caractérisé en ce que** le procédé comprend les étapes consistant à :
inclure, en tant qu'une partie du logiciel client WAP (WAPCLIENT) une deuxième application (DRIVER) qui a été chargée dans le but de débuter l'exécution de, et de contrôler des applications de la boîte à outils d'application du MIA ;
appeler la deuxième application (DRIVER) au moyen de la première application (WMLSCRIPT) lorsque l'on souhaite utiliser des applications de la boîte à outils d'application du MIA ; et
contrôler et gérer, au moyen de la deuxième application (DRIVER) des applications de la boîte à outils d'application du MIA ainsi que l'échange d'informations entre l'utilisateur du dispositif formant terminal (MS) et des applications de la boîte à outils d'application du MIA.

2. Procédé selon la revendication 1, **caractérisé en ce que** :
la deuxième application (DRIVER) est utilisée pour envoyer un message d'interrogation à l'utilisateur du dispositif formant terminal (MS) ; et
la réponse de l'utilisateur au message d'interrogation est éditée ; et
l'information éditée est envoyée vers l'application de la boîte à outils d'application du MIA.

3. Procédé selon la revendication 1, **caractérisé en ce que** :
la deuxième application (DRIVER) est utilisée pour envoyer un message d'interrogation à l'utilisateur du dispositif formant terminal (MS) ; et
l'information définie par l'utilisateur est envoyée vers l'application de la boîte à outils d'application du MIA.

4. Procédé selon l'une quelconque des revendications précédentes 1, 2 ou 3, **caractérisé en ce que** la deuxième application (DRIVER) est chargée dans le dispositif formant terminal (MS) ou la carte à puce (SC).

5. Procédé selon l'une quelconque des revendications précédentes 1, 2 ou 3, **caractérisé en ce que** la deuxième application (DRIVER) est chargée dans le dispositif formant terminal (MS) ou la carte à puce (SC) à partir du réseau de télécommunications (WN).

6. Procédé selon l'une quelconque des revendications précédentes 1, 2, 3, 4 ou 5, **caractérisé en ce que** le code de programme qui est connecté à la deuxième application (DRIVER) est signé avec une signature numérique.

7. Procédé selon l'une quelconque des revendications précédentes 1, 2, 3, 4, 5 ou 6, **caractérisé en ce que** :
la clé publique de l'expéditeur de la deuxième application (DRIVER) est chargée dans le dispositif formant terminal (MS) et / ou la carte à puce (SC) ; et
l'origine de l'expéditeur de la deuxième application (DRIVER) est vérifiée.

8. Procédé selon l'une quelconque des revendications précédentes 1, 2, 3, 4, 5, 6 ou 7, **caractérisé en ce que** des informations complémentaires sont recherchées en vue de l'utilisation des applications de la boîte à outils d'application du MIA.

9. Système d'échange sécurisé d'informations entre l'utilisateur et l'application d'une boîte à outils d'application du MIA (Module d'Identification de l'Abonné - SIM) dans un système de télécommunications comprenant :
un réseau de télécommunications (WN) ;
un dispositif formant terminal (MS), qui est connecté au réseau de télécommunications (WN) ;
une carte à puce (SC) qui a été insérée dans le dispositif formant terminal (MS) ;
un logiciel client WAP (WAPCLIENT) qui a été chargé dans le dispositif formant terminal (MS) ;
une boîte à outils d'application du MIA (STK) qui a été chargée dans le dispositif formant terminal (MS) et / ou la carte à puce (SC) ;
une première application (WMLSCRIPT) qui fait partie du logiciel client WAP (WAPCLIENT) ;
un système dans lequel le dispositif formant terminal (MS) est doté des caractéristiques nécessaires pour utiliser le protocole WAP ;
**caractérisé en ce que** le système comprend :
une deuxième application (DRIVER) qui a été chargée dans le but de débuter l'exécution de, et de contrôler les applications de la boîte à outils d'application du MIA ;
des moyens (CAL) pour appeler la deuxième application (DRIVER) au moyen de la première application (WMLSCRIPT) lorsque l'on souhaite utiliser des applications de la boîte à outils d'application du MIA ; et
des premiers moyens de communication (IP) qui sont utilisés pour contrôler les applications de la boîte à outils d'application du MIA, et pour gérer l'échange d'informations entre l'utilisateur du dispositif formant terminal et des applications de la boîte à outils d'application du MIA.

10. Système selon la revendication 9, **caractérisé en ce que** le système comprend :
des moyens (SND) pour envoyer un message d'interrogation au moyen de la deuxième application (DRIVER) vers l'utilisateur du dispositif formant terminal (MS) ;
des moyens (ED) pour éditer la réponse définie par l'utilisateur ; et
des deuxièmes moyens de communication (FW) pour envoyer l'information éditée vers l'application de la boîte à outils d'application du MIA.

11. Système selon la revendication 9, **caractérisé en ce que** le système comprend :
des moyens (SND) pour envoyer un message d'interrogation au moyen de la deuxième application (DRIVER) vers l'utilisateur du dispositif formant terminal (MS) ; et
des deuxièmes moyens de communication (FW) pour envoyer l'information définie par l'utilisateur vers l'application de la boîte à outils d'application du MIA.

12. Système selon l'une quelconque des revendications précédentes 9, 10 ou 11, **caractérisé en ce que** le système comprend une première entité de recherche d'informations (LD) pour charger la deuxième application (DRIVER) dans le dispositif formant terminal (MS) ou la carte à puce (SC).

13. Système selon l'une quelconque des revendications précédentes 9, 10, 11 ou 12, **caractérisé en ce que** le système comprend une tierce partie de confiance (TTP (Trusted Third Party)) pour signer le code de programme connecté à la deuxième application (DRIVER) avec une signature numérique.

14. Système selon l'une quelconque des revendications précédentes 9, 10, 11, 12 ou 13, **caractérisé en ce que** le système comprend :
une deuxième entité de recherche d'informations (IR) pour charger la clé publique de l'expéditeur de la deuxième application (DRIVER) dans le dispositif formant terminal (MS) et / ou la carte à puce (SC) ; et
des moyens (CHK) pour vérifier l'origine de l'expéditeur de la deuxième application (DRIVER).

15. Système selon l'une quelconque des revendications précédentes 9, 10, 11, 12, 13 ou 14, **caractérisé en ce que** le système comprend une troisième entité de recherche d'informations (IO) qui est utilisée afin de rechercher des informations complémentaires pour l'utilisation d'applications de la boîte à outils d'application du MIA.

16. Système selon l'une quelconque des revendications précédentes 9, 10, 11, 12, 13, 14 ou 15, **caractérisé en ce que** le système comprend un serveur (SERVER) qui est connecté au réseau de télécommunications (WN) et à partir duquel il est possible de charger la deuxième application (DRIVER) dans le dispositif formant terminal (MS) ou la carte à puce (SC).

17. Système selon l'une quelconque des revendications précédentes 9, 10, 11, 12, 13, 14, 15 ou 16, **caractérisé en ce que** la première application (WMLSCRIPT) et / ou la deuxième application (DRIVER) sont basées sur le langage WML ou sur le langage de commande WMLScript.

18. Système selon l'une quelconque des revendications précédentes 9, 10, 11, 12, 13, 14, 15, 16 ou 17, **caractérisé en ce que** le dispositif formant terminal (MS) est une station mobile.

19. Système selon l'une quelconque des revendications précédentes 9, 10, 11, 12, 13, 14, 15, 16, 17 ou 18, **caractérisé en ce que** le réseau de télécommunications (WN) est un réseau de télécommunications mobiles.

20. Système selon l'une quelconque des revendications précédentes 9, 10, 11, 12, 13, 14, 15, 16, 17, 18 ou 19, **caractérisé en ce que** la carte à puce (SC) est un module d'identification d'abonné.

21. Système selon l'une quelconque des revendications précédentes 9, 10, 11, 12, 13, 14, 15, 16, 17, 18 ou 19, **caractérisé en ce que** la carte à puce (SC) est un module d'identification d'abonné qui comprend un module WIM (WAP Identity Module).

22. Système selon l'une quelconque des revendications précédentes 9, 10, 11, 12, 13, 14, 15, 16, 17, 18 ou 19, **caractérisé en ce que** la carte à puce (SC) est une carte WIM.
